# EUROPÄISCHE PATENTSCHRIFT

(11) **EP 3 101 391 B1**
(45) Veröffentlichungstag und Bekanntmachung des Hinweises auf die Patenterteilung: **03.04.2019**
(21) Anmeldenummer: 16172641.9
(22) Anmeldetag: 02.06.2016
(51) Int. Cl.: G01C 21/34

(54) **BILDEN EINER MUSTERROUTE AUS EINER ERKUNDUNGSROUTE MIT EINEM NAVIGATIONSSYSTEM**
FORMATION OF A SAMPLE ROUTE FROM AN EXPLORATION ROUTE WITH A NAVIGATION SYSTEM
FORMATION D'UN ITINERAIRE MODELE A PARTIR D'UN ITINERAIRE DE RECONNAISSANCE A L'AIDE D'UN SYSTEME DE NAVIGATION

(30) Priorität: 05.06.2015 DE 102015210354
(43) Veröffentlichungstag der Anmeldung: 07.12.2016
(73) Patentinhaber: Preh Car Connect GmbH, 01156 Dresden (DE)
(72) Erfinder: Porstmann, Frank, 01705 Freital (DE)

(56) Entgegenhaltungen:
- EP-A2- 3 023 740
- WO-A1-2014/103399
- DE-A1-102007 045 082
- JP-A- 2004 226 342

## Beschreibung

Die Erfindung betrifft ein Verfahren zum Bilden einer Musterroute aus einer Erkundungsroute mit einem Navigationssystem und ein Navigationssystem zur Durchführung des Verfahrens.

Bekannte Navigationssysteme sind dazu eingerichtet, aktuelle Positionen und unter Verwendung von Geodaten eine Navigationsroute zu einem vorgebbaren Navigationsziel zu bestimmen und eine Zielführung zu dem Navigationsziel durchzuführen.

Ein entsprechendes Navigationssystem ist beispielsweise aus dem Dokument JP 2004 226342 A bekannt.

Die Dokumente US 2015 0308848 A1 und DE 10 2007 045 082 A1 offenbaren die Bestimmung von Positionsdaten und deren Bearbeitung in einer zentralen Einrichtung zur Bereitstellung einer Präsentationsroute bzw. zur Aktualisierung von Kartendaten.

Das nachveröffentlichte Dokument EP 3 023 740 A2 offenbart die Erzeugung einer Route aus Spurpunkten, wobei potentiell fehlerhafte oder überflüssige Spurpunkte entfernt werden.

Geodaten sind digitale Informationen, denen auf der Erdoberfläche eine bestimmte räumliche Lage zugewiesen werden kann. Geodaten repräsentieren unter anderem geografische Objekte, beispielsweise Straßen, Wege, Plätze, Eisenbahnlinien, Flüsse, Gebäude, Brücken, Geländeformen, Landesgrenzen, Parkmöglichkeiten, Raststätten, Ortschaften, Verkehrsregelungen und Geschwindigkeitsbegrenzungen.

In Gebieten, für die ein Navigationssystem über keine oder nur unzureichende Geodaten verfügt oder verfügbare Geodaten aufgrund aktueller Umstände oder lokaler Gegebenheiten wie Wetterverhältnissen oder deren Folgen unbrauchbar sind, beispielsweise weil Wege nicht benutzbar sind, sind übliche Zielführungen durch ein Navigationssystem jedoch nicht möglich oder wenig hilfreich.

Der Erfindung liegt die Aufgabe zu Grunde, ein Verfahren zum Bilden einer Musterroute aus einer Erkundungsroute mit einem Navigationssystem, insbesondere in Gebieten, für die das Navigationssystem über keine oder keine brauchbaren Geodaten verfügt, anzugeben. Ferner liegt der Erfindung die Aufgabe zu Grunde, ein Navigationssystem zur Durchführung des Verfahrens anzugeben.

Die Aufgabe wird erfindungsgemäß hinsichtlich des Verfahrens durch die Merkmale des Anspruchs 1 und hinsichtlich des Navigationssystems durch die Merkmale des Anspruchs 6 gelöst.

Vorteilhafte Ausführungsformen der Erfindung sind Gegenstand der Unteransprüche.

Bei dem erfindungsgemäßen Verfahren wird mittels des Navigationssystems eine zurückgelegte Erkundungsroute bestimmt und geprüft, ob die Erkundungsroute einen Umkehrabschnitt aufweist. Wenn die Erkundungsroute einen Umkehrabschnitt aufweist, wird aus der Erkundungsroute eine Musterroute, die den Umkehrabschnitt der Erkundungsroute nicht aufweist, gebildet.

Unter einem Umkehrabschnitt einer zurückgelegten Route wird ein Routenabschnitt verstanden, der verkürzbar ist. Ein Routenabschnitt ist beispielsweise verkürzbar, wenn der Routenabschnitt nacheinander zweimal, aber in voneinander verschiedenen Richtungen zurückgelegt wird, d. h. die Bewegungsrichtung umgekehrt wird, und/oder wenn zwei Teilabschnitte des Routenabschnitts als nebeneinander verlaufend beurteilt werden, d.h. ein maximaler Abstand zwischen den zwei Teilabschnitten einen Toleranzabstand nicht überschreitet.

Bei dem erfindungsgemäßen Verfahren wird also aus einer zurückgelegten Erkundungsroute eine Musterroute gebildet, indem ein Umkehrabschnitt der Erkundungsroute bestimmt und aus der Erkundungsroute entfernt wird, so dass die Musterroute diesen Umkehrabschnitt nicht aufweist. Dadurch kann in einem Gebiet, für das keine oder keine brauchbaren Geodaten vorliegen, während einer Erkundungstour mittels eines Navigationssystems eine Musterroute zu einem Navigationsziel gebildet werden.

Durch das Entfernen des Umkehrabschnitts aus der Erkundungsroute wird vorteilhaft ein Routenabschnitt, der sich auf der Erkundungstour als verkehrter Weg, beispielsweise als eine Sackgasse, herausgestellt hat und auf dem deshalb die Bewegungsrichtung umgekehrt wurde, nicht in die Musterroute aufgenommen. Dadurch kann ein Navigationssystem, welches die Musterroute später verwendet, anhand der Musterroute eine Zielführung zu dem Navigationsziel unter Vermeidung des auf der Erkundungsroute zurückgelegten Umkehrabschnitts durchführen.

Beispielsweise kann das Verfahren für eine Gruppe von Fahrzeugen auf der Suche nach einem Navigationsziel, z. B. für eine Gruppe von Rettungsfahrzeugen eines Bergrettungsdienstes auf der Suche nach einer Einsatzstelle in einem verschneiten Gebirgsgebiet, verwendet werden, wobei in jedem Fahrzeug ein Navigationssystem angeordnet ist, das mit den anderen Navigationssystemen, beispielsweise über ein Funknetz, kommunizieren kann. Eines der Fahrzeuge kann eine Erkundungsfahrt zu dem Navigationsziel durchführen, wobei mittels des darin angeordneten Navigationssystems aus der bei der Erkundungsfahrt zurückgelegten Erkundungsroute eine Musterroute gebildet wird, die an die Navigationssysteme der anderen Fahrzeuge gesendet wird und von diesen Navigationssystemen zur Zielführung zu dem Navigationsziel verwendet wird.

Eine nicht beanspruchte Variante der Erfindung sieht vor, dass ein Routenabschnitt der Erkundungsroute als ein Umkehrabschnitt beurteilt wird, wenn der Routenabschnitt in zueinander entgegengesetzten Richtungen zurückgelegt wurde.

Eine weitere nicht beanspruchte Variante der Erfindung sieht vor, dass ein Routenabschnitt der Erkundungsroute als ein Umkehrabschnitt betrachtet wird, wenn der Routenabschnitt zwei Teilabschnitte aufweist, die nebeneinander verlaufen und in zueinander entgegengesetzten Richtungen zurückgelegt werden.

Die beiden vorgenannten Varianten der Erfindung ermöglichen eine Erkennung von Umkehrabschnitten unter Verwendung geeigneter Kriterien, die zum Beispiel im Durchlaufen von Umkehrabschnitten in zueinander entgegengesetzten Richtungen und in der Verkürzbarkeit von Umkehrabschnitten bestehen.

Bei der zuletzt genannten Varianten der Erfindung wird vorzugsweise ein Toleranzabstand vorgegeben und zwei Teilabschnitte eines Routenabschnitts werden als nebeneinander verlaufend beurteilt, wenn ein maximaler Abstand zwischen ihnen den Toleranzabstand nicht überschreitet.

Die Vorgabe des Toleranzabstands liefert vorteilhaft ein quantitatives Kriterium zur Unterscheidung zwischen Teilabschnitten, die einen U-förmigen Routenabschnitt und somit keinen Umkehrabschnitt bilden, und Teilabschnitten, die beispielsweise auf unterschiedlichen Fahrstreifen desselben Verkehrswegs zurückgelegt werden und einen Umkehrabschnitt bilden.

Gemäß der Erfindung wird ein Routenabschnitt dann als verkürzbar beurteilt, wenn mittels des Navigationssystems eine einen Anfangspunkt und einen Endpunkt des Routenabschnitts verbindende Verbindungsroute ermittelt wird, die kürzer als der Routenabschnitt ist.

In einer weiteren nicht beanspruchten Variante der Erfindung wird ein Abstandsschwellenwert vorgegeben und ein Routenabschnitt wird dann als verkürzbar beurteilt, wenn ein Abstand eines Endpunktes von einem Anfangspunkt des Routenabschnitts kleiner als der vorgegebene Abstandsschwellenwert ist.

Die zuverlässige Erkennung der Verkürzbarkeit ist eine Voraussetzung dafür, dass ein Routenabschnitt aus der Erkundungsroute entfernt werden kann, und die resultierende Musterroute auch tatsächlich zurückgelegt werden kann.

Das erfindungsgemäße Kriterium weist die Existenz einer mittels des Navigationssystems ermittelten Verbindungsroute auf, die von dem Anfangspunkt zu dem Endpunkt des Routenabschnitts verläuft und kürzer als der Routenabschnitt ist. Um dieses Kriterium zu erfüllen, muss eine derartige Verbindungsroute in den Geodaten, die dem Navigationssystem zur Verfügung stehen, ausgewiesen sein.

Die zuletzt genannte Variante der Erfindung weist die Bedingung auf, dass der Endpunkt und der Anfangspunkt des Routenabschnitts weniger als ein vorgegebener Abstandsschwellenwert voneinander entfernt sind. Dieses Kriterium ist vornehmlich auf Situationen gerichtet, in denen das erste Kriterium zur Erkennung der Verkürzbarkeit eines Routenabschnitts nicht anwendbar ist, beispielsweise weil keine Geodaten über mögliche Verbindungsrouten zwischen dem Endpunkt und dem Anfangspunkt des Routenabschnitts verfügbar sind. Das zweite Kriterium beschreibt, dass die Existenz einer Verbindungsroute zwischen dem Anfangspunkt und dem Endpunkt eines Routenabschnitts in der Regel umso wahrscheinlicher ist, je kleiner der Abstand zwischen dem Endpunkt und dem Anfangspunkt des Routenabschnitts ist. Wird der Abstandsschwellenwert daher genügend klein gewählt, ist die Wahrscheinlichkeit groß, dass zwischen dem Anfangspunkt und dem Endpunkt eines Routenabschnitts tatsächlich eine Verbindungsroute existiert, wenn der Abstand zwischen dem Anfangspunkt und dem Endpunkt kleiner als der Abstandsschwellenwert ist. Das zweite Kriterium ist einfacher als das erste Kriterium, birgt jedoch das Risiko, dass auf eine tatsächlich nicht existente Verbindungsroute geschlossen wird. Wenn dieses Risiko vermieden werden soll, wird das zweite Kriterium nicht verwendet.

Eine Ausführungsform der Erfindung sieht vor, dass die gebildete Musterroute von dem Navigationssystem an ein anderes Navigationssystem und/oder an einen Empfänger, durch den sie einem anderen Navigationssystem verfügbar gemacht wird, gesendet wird. Vorzugsweise wird die gebildete Musterroute als Teil einer Nachricht gesendet, wobei die Nachricht noch weitere Informationen aufweist.

Unter dem Versenden einer Musterroute wird das Versenden von Daten, die die Musterroute beschreiben, verstanden. Die Daten werden gemäß Mobilfunkstandards oder den IEEE-Standards 802.11 und/oder 802.16 versendet.

Eine weitere Ausführungsform der Erfindung sieht vor, dass die gebildete Musterroute extern abrufbar von dem Navigationssystem, in welchem die Musterroute gebildet wurde, bereitgehalten wird, wobei das Navigationssystem als ein Zentralrechner fungiert. Ferner wird vorzugsweise von dem Navigationssystem eine Information über die Abrufbarkeit der gebildeten Musterroute und/oder eine Zugriffsberechtigung für die gebildete Musterroute versendet.

Die vorgenannten Ausführungsformen der Erfindung ermöglichen jeweils, die Musterroute für andere Navigationssysteme verfügbar zu machen. Die gebildete Musterroute kann dann vorzugsweise von einem anderen Navigationssystem für eine Zielführung verwendet werden.

Das erfindungsgemäße Navigationssystem zur Durchführung des erfindungsgemäßen Verfahrens umfasst eine Recheneinheit, eingerichtet zur Bestimmung der zurückgelegten Erkundungsroute, zur Prüfung, ob die Erkundungsroute einen Umkehrabschnitt aufweist, und zur Bildung der Musterroute, so dass die Musterroute den Umkehrabschnitt nicht aufweist. Das Navigationssystem kann ferner eine Positionsbestimmungseinheit, eingerichtet zur Bestimmung einer aktuellen Position durch Auswertung von an die Positionsbestimmungseinheit übermittelten Positionsbestimmungssignalen, und eine Speichereinheit, eingerichtet zum Speichern von Positionsdaten, aufweisen.

Ein derartiges Navigationssystem ermöglicht die Durchführung des erfindungsgemäßen Verfahrens mit den oben genannten Vorteilen.

Vorzugsweise weist das Navigationssystem ferner eine Schnittstelle auf, die zur Übertragung einer von der Recheneinheit gebildeten Musterroute zu einer Kommunikationseinheit zum Versenden der Musterroute eingerichtet ist.

Dabei kann die Schnittstelle zur Verbindung der Recheneinheit mit einer in das Navigationssystem integrierten Kommunikationseinheit oder einer externen Kommunikationseinheit ausgebildet sein. Eine Schnittstelle für eine externe Kommunikationseinheit, beispielsweise für mobile Endgeräte, ermöglicht vorteilhaft eine flexible Kopplung des Navigationssystems an externe Kommunikationseinheiten zum Versenden der Musterroute.

Alternativ oder zusätzlich weist das Navigationssystem ferner eine Kommunikationseinheit auf, die zum Versenden der Musterroute eingerichtet ist.

Außerdem weist das Navigationssystem vorzugsweise eine Empfangseinheit auf, die zum Empfangen von Positionsbestimmungssignalen und Übermitteln der empfangenen Positionsbestimmungssignale an die Positionsbestimmungseinheit eingerichtet ist.

Die vorgenannten Ausführungsformen der Erfindung sehen eine in das Navigationssystem integrierte Kommunikationseinheit und/oder eine in das Navigationssystem integrierte Empfangseinheit vor. Dadurch werden das Empfangen von Positionsbestimmungssignalen und/oder das Versenden der Musterroute unabhängig von der Verfügbarkeit einer externen Empfangseinheit bzw. einer externen Kommunikationseinheit ermöglicht.

Weitere Ausführungsformen der Erfindung werden im Folgenden anhand von Zeichnungen näher erläutert.

Darin zeigen:
- Figur 1: ein Blockdiagramm eines Navigationssystems,
- Figur 2: ein Flussdiagramm eines Verfahrens zum Betreiben eines Navigationssystems,
- Figur 3: eine erste Erkundungsroute,
- Figur 4: eine zweite Erkundungsroute und
- Figur 5: eine dritte Erkundungsroute.

Einander entsprechende Bestandteile sind in allen Figuren mit den gleichen Bezugszeichen versehen.

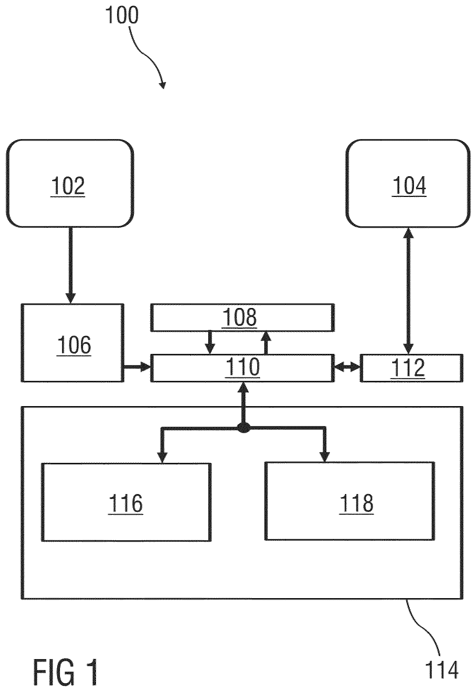

**Figur 1** zeigt ein Blockdiagramm eines Navigationssystems 100. Das Navigationssystem 100 umfasst eine Empfangseinheit 102, eine Kommunikationseinheit 104, eine Positionsbestimmungseinheit 106, eine Ausgabe- und Bedieneinheit 108, eine Recheneinheit 110, eine Schnittstelle 112 und eine Speichereinheit 114.

Bei der Empfangseinheit 102 handelt es sich um eine GPS-Antenne. Die Empfangseinheit 102 ist zum Empfangen von Positionsbestimmungssignalen, beispielsweise von Funksignalen, die von Navigationssatelliten eines Navigationssatellitensystems ausgesendet werden, und Übermitteln der Positionsbestimmungssignale an die Positionsbestimmungseinheit 106 eingerichtet.

Die mit der Empfangseinheit 102 verbundene Positionsbestimmungseinheit 106 ist als ein GPS-Empfänger ausgebildet. Alternativ kann anstelle eines GPS-Empfängers eine andere Art von Positionsbestimmungseinheit verwendet werden, zum Beispiel ein GALILEO-Empfänger, der mit einer entsprechend ausgebildeten Empfangseinheit ausgestattet ist. Die Positionsbestimmungseinheit 106 ist zur Bestimmung einer aktuellen Position durch Auswertung von an sie übermittelten Positionsbestimmungssignalen und zur Übermittlung der Position an die Recheneinheit 110 eingerichtet.

Die Speichereinheit 114 verfügt über einen nichtflüchtigen Speicher in Form eines EEPROMs (Electrically Erasable Programmable Read-Only Memory). Alternativ dazu kann die Speichereinheit eine andere Art von Speicher aufweisen, zum Beispiel einen Flash-EEPROM oder eine Festplatte. Gemäß einer weiteren Alternative kann die Speichereinheit über mehrere der genannten Speicher verfügen.

Die Speichereinheit 114 ist zur Speicherung von Positionsdaten eingerichtet. Insbesondere werden mittels der Speichereinheit 114 eine Landkartendatenbank 116 und eine Geokoordinatendatenbank 118 gespeichert. In der Landkartendatenbank 116 werden unter anderem Geodaten abgelegt, beispielsweise in Form einer digitalen Karte. In der Geokoordinatendatenbank 118 werden unter anderem Positionen abgelegt, die mittels der Positionsbestimmungseinheit 106 bestimmt wurden.

Die Recheneinheit 110 ist die zentrale Steuereinheit des Navigationssystems 100. Sie verfügt neben einem Prozessor (Central Processing Unit, CPU) über einen Arbeitsspeicher (Random Access Memory, RAM), welcher zum flüchtigen Speichern von Variablen und Zwischenergebnissen dient. Der Prozessor und der Arbeitsspeicher sind auf demselben integrierten Schaltkreis angeordnet. Alternativ dazu können der Prozessor und der Arbeitsspeicher separat voneinander angeordnet sein, zum Beispiel jeweils auf einem anderen integrierten Schaltkreis.

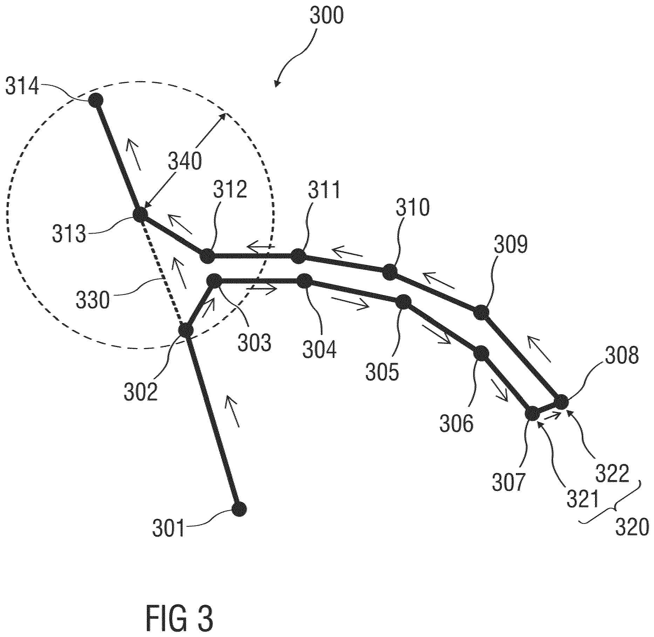

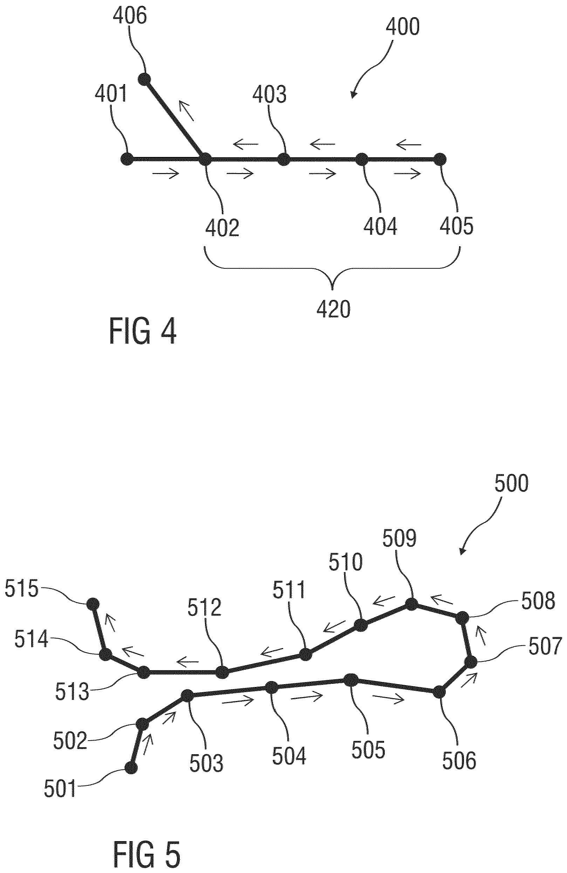

Die Recheneinheit 110 ist eingerichtet, unter Verwendung der ihr von der Positionsbestimmungseinheit 106 übermittelten aktuellen Positionen und in der Speichereinheit 114 gespeicherten Positionsdaten eine zurückgelegte Erkundungsroute 300, 400, 500 (siehe Figuren 3 bis 5) zu bestimmen, zu prüfen, ob die Erkundungsroute 300, 400, 500 einen Umkehrabschnitt 320, 420 (siehe Figuren 3 und 4) aufweist, und aus der Erkundungsroute 300, 400, 500 eine Musterroute, welche die Umkehrabschnitte 320, 420 der Erkundungsroute 300, 400, 500 nicht aufweist, zu bilden.

Außerdem ist die Recheneinheit 110 eingerichtet, von der Positionsbestimmungseinheit 106 bestimmte aktuelle Positionen sowie von der Recheneinheit 110 bestimmte Erkundungsrouten 300, 400, 500 und Musterrouten zur Speicherung an die Speichereinheit 114 zu übergeben.

Die Recheneinheit 110 ist ferner eingerichtet, die von ihr bestimmten Musterrouten in einem von der Kommunikationseinheit 104 verwendbaren Datenformat über die Schnittstelle 112 an die Kommunikationseinheit 104 zu übermitteln, so dass die Musterrouten von der Kommunikationseinheit 104 als Bestandteil von Nachrichten versendet werden können. Alternativ werden die Musterrouten extern abrufbar in der Speichereinheit 114 bereitgehalten, wobei das Navigationssystem 100 als Zentralrechner (engl. Host) fungiert. Auf die gespeicherten Musterrouten kann entweder frei oder nur durch autorisierte Einrichtungen oder Personen zugegriffen werden.

Die Ausgabe- und Bedieneinheit 108 weist einen berührungsempfindlichen Bildschirm, ein Tastenfeld und eine Spracheingabeeinrichtung auf. Die Ausgabe- und Bedieneinheit 108 ist eingerichtet, über den Bildschirm Informationen, insbesondere über von der Recheneinheit 110 bestimmte Erkundungsrouten 300, 400, 500, an einen Benutzer des Navigationssystems 100 auszugeben.

Über die Schnittstelle 112 ist die Recheneinheit 110 mit der Kommunikationseinheit 104 verbunden.

Die Kommunikationseinheit 104 ist zum Senden und Empfangen von Nachrichten, beispielsweise über ein Funknetz, eingerichtet. Bei dem Funknetz kann es sich um ein Mobilfunknetz oder um ein lokales Funknetz handeln, das dem Standard IEEE-802.11 entspricht. Alternativ werden die Nachrichten mittels einer optischen drahtlosen Kommunikationstechnologie versendet und empfangen. Die Nachrichten werden beispielsweise an eine Verkehrsinfrastruktur oder von einer Verkehrsinfrastruktur übertragen.

In einer weiteren Ausführungsform der Erfindung ist die Empfangseinheit 102 oder die Kommunikationseinheit 104 nicht in das Navigationssystem 100 integriert, sondern als eine externe Komponente ausgeführt, die mit dem Navigationssystem 100 verbindbar ist.

Beispielsweise ist die Kommunikationseinheit 104 ein mobiles Endgerät eines Benutzers des Navigationssystems 100, wie ein Mobiltelefon oder ein tragbarer Computer, wobei das Mobiltelefon beziehungsweise der tragbare Computer zum Senden und Empfangen von Nachrichten ausgebildet und mit der Schnittstelle 112 verbindbar ist.

Auch kann die Empfangseinheit 102 als ein mobiles Endgerät eines Benutzers des Navigationssystems 100 ausgebildet sein, das zum Empfangen von Positionsbestimmungssignalen eingerichtet und mit der Positionsbestimmungseinheit 106 verbindbar ist, um die Positionsbestimmungssignale an die Positionsbestimmungseinheit 106 zu übermitteln.

In einer weiteren Ausführungsform der Erfindung sind die Kommunikationseinheit 104 und die Empfangseinheit 102 in demselben mobilen Endgerät angeordnet, welches mit dem Navigationssystem 100 verbindbar ist.

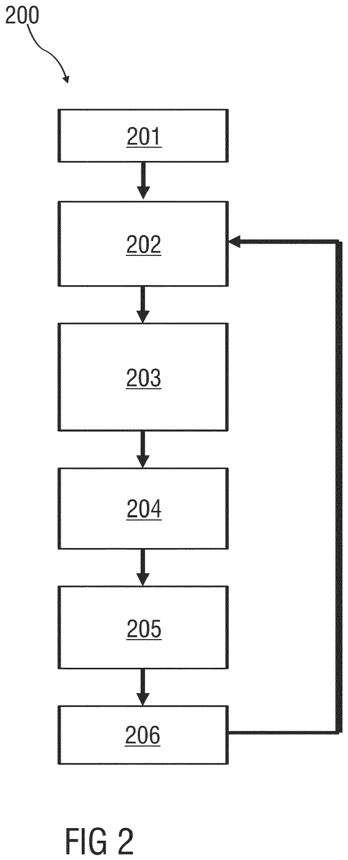

**Figur 2** zeigt ein Flussdiagramm 200 eines Verfahrens zum Betreiben des Navigationssystems 100.

Bei einem ersten Verfahrensschritt 201 wird das Verfahren initialisiert, beispielsweise mittels Betätigen der Ausgabe- und Bedieneinheit 108 durch einen Benutzer des Navigationssystems 100.

Bei einem zweiten Verfahrensschritt 202 werden Positionsbestimmungssignale mittels der Empfangseinheit 102 empfangen und an die Positionsbestimmungseinheit 106 weitergeleitet. Ferner werden in dem Verfahrensschritt 202 von der Positionsbestimmungseinheit 106 aus den Positionsbestimmungssignalen aktuelle Positionen bestimmt und an die Recheneinheit 110 übermittelt, und die aktuellen Positionen werden in der Geokoordinatendatenbank 118 der Speichereinheit 114 gespeichert. Wenn sich das Navigationssystem 100 auf einem Weg befindet, dessen Geodaten in der Landkartendatenbank 116 abgelegt sind, wird dies vorzugsweise bei der Bestimmung der aktuellen Position berücksichtigt, indem als aktuelle Position eine Wegposition auf diesem Weg bestimmt wird, beispielsweise mit einer Fangfunktion, die einer aus den Positionsbestimmungssignalen ermittelten Position eine dazu benachbarte Wegposition zuordnet. Wenn sich das Navigationssystem 100 nicht auf einem Weg befindet, dessen Geodaten in der Landkartendatenbank 116 abgelegt sind, wird die aktuelle Position ausschließlich aus den Positionsbestimmungssignalen bestimmt.

Bei einem dritten Verfahrensschritt 203 wird von der Recheneinheit 110 anhand der aktuellen Positionen eine zurückgelegte Erkundungsroute 300, 400, 500 bestimmt.

Bei einem vierten Verfahrensschritt 204 wird von der Recheneinheit 110 automatisch geprüft, ob die in dem dritten Verfahrensschritt 203 bestimmte Erkundungsroute 300, 400, 500 einen Umkehrabschnitt 320, 420 aufweist. Die Durchführung dieser Prüfung wird unten anhand der Figuren 3 bis 5 näher beschrieben.

Bei einem fünften Verfahrensschritt 205 wird von der Recheneinheit 110 aus der in dem dritten Verfahrensschritt 203 bestimmten Erkundungsroute 300, 400, 500 automatisch eine Musterroute gebildet, die einen in dem Verfahrensschritt 204 erkannten Umkehrabschnitt 320, 420 der Erkundungsroute 300, 400, 500 nicht aufweist.

Bei einem sechsten Verfahrensschritt 206 wird die in dem Verfahrensschritt 205 gebildete Musterroute von der Recheneinheit 110 über die Schnittstelle 112 an die Kommunikationseinheit 104 übermittelt und mittels der Kommunikationseinheit 104 versendet. Anschließend wird das Verfahren mit dem zweiten Verfahrensschritt 202 fortgesetzt.

Die Versendung der Musterroute in dem sechsten Verfahrensschritt 206 erfolgt automatisch zu einem vorgebbaren Zeitpunkt. Beispielsweise können beim mehrmaligen Durchlaufen der Verfahrensschritte zwei bis sechs erzeugte Musterrouten periodisch versendet werden.

Alternativ wird die Versendung der Musterroute von einem Benutzer des Navigationssystems 100 mittels der Ausgabe- und Bedieneinheit 108 ausgelöst.

Als eine weitere Alternative wird die Musterroute versendet, wenn eine entsprechende Anfrage von der Empfangseinheit 102 des Navigationssystems 100 empfangen, an die Recheneinheit 110 weitergeleitet und in dieser verarbeitet wurde. Optional muss die Anfrage dazu von einer autorisierten Einrichtung oder einer autorisierten Person gestellt werden.

Die Versendung der Musterroute erfolgt automatisch an eine oder mehrere Adressen, die in dem Navigationssystem 100, beispielsweise in der Speichereinheit 114 oder in der Kommunikationseinheit 104, speicherbar sind.

Zusätzlich oder alternativ wird die Musterroute an eine oder mehrere Adressen versendet, die von einem Benutzer des Navigationssystems 100 mittels der Ausgabe- und Bedieneinheit 108 eingegeben und/oder aus einer Adressenliste ausgewählt wurden.

Die Adressenliste kann in dem Navigationssystem 100 gespeichert sein, beispielsweise in der Speichereinheit 114 oder in der Kommunikationseinheit 104. Bei den Adressen kann es sich um Adressen handeln, über die anderen Navigationssystemen 100 die gebildeten Musterrouten mitteilbar sind.

Die Bestimmung der Erkundungsroute 300, 400, 500, die Erkennung eines Umkehrabschnitts 320, 420 und die Bildung der Musterroute können unabhängig von der Verwendung des Navigationssystems 100 zur aktiven Zielführung durchgeführt werden. Das anhand der Figur 2 beschriebene Verfahren wird daher mit oder ohne eine aktive Zielführung durch das Navigationssystem 100 ausgeführt.

Die Figuren 3 bis 5 zeigen jeweils eine in dem dritten Verfahrensschritt 203 bestimmte Erkundungsroute 300, 400, 500.

**Figur 3** zeigt eine erste Erkundungsroute 300, die aus Knoten 301 bis 314 und jeweils zwei Knoten 301 bis 314 verbindenden Kanten besteht. Eine Richtung, in der eine Kante durchlaufen wird, ist durch einen Pfeil dargestellt.

Die erste Erkundungsroute 300 weist einen Routenabschnitt auf, der von dem Knoten 302 über die Knoten 303 bis 312 zu dem Knoten 313 verläuft. Ein erster Teilabschnitt 321 des Routenabschnitts verläuft von dem Knoten 302 über die Knoten 303 bis 306 bis zu dem Knoten 307. Ein zweiter Teilabschnitt 322 des Routenabschnitts verläuft von dem Knoten 308 über die Knoten 309 bis 312 zu dem Knoten 313.

Der Routenabschnitt wird als ein Umkehrabschnitt 320 beurteilt, weil er folgendes Kriterium erfüllt: der Routenabschnitt besteht aus zwei Teilabschnitten 321, 322, die nebeneinander verlaufen und in zueinander entgegengesetzten Richtungen zurückgelegt werden, und der Routenabschnitt ist verkürzbar.

Um zu beurteilen, ob die beiden Teilabschnitte 321, 322 des Routenabschnitts der Erkundungsroute 300, 400, 500 nebeneinander verlaufen, wird ein Toleranzabstand 340 vorgegeben. Die beiden Teilabschnitte 321, 322 werden als nebeneinander liegend betrachtet, wenn das Maximum aller Abstände, welche jeweils die kürzeste Entfernung zwischen einem auf einem der Teilabschnitte 321, 322 angeordneten Punkt und dem anderen Teilabschnitt 321, 322 repräsentieren, den Toleranzabstand 340 nicht überschreitet. In Figur 3 ist der maximale Abstand zwischen den Teilabschnitten 321, 322 die Entfernung zwischen dem Knoten 303 und dem Knoten 313.

Der Routenabschnitt der Erkundungsroute 300, 400, 500 wird als Umkehrabschnitt 320, 420 betrachtet, wenn mittels des Navigationssystems 100 eine von einem Anfangspunkt des Routenabschnitts zu dem Endpunkt des Routenabschnitts verlaufende Verbindungsroute 330 ermittelt wird, die kürzer als der Routenabschnitt ist. Unter einer Verbindungsroute 330 wird eine Verbindung des Anfangspunktes und des Endpunktes des Routenabschnitts verstanden, die Eignungskriterien erfüllt, die ein Passieren der Verbindungsroute 330 von dem Anfangspunkt zu dem Endpunkt mit den jeweils vorhandenen Mitteln ermöglichen. Die Eignungskriterien können dabei beispielsweise eine Beschaffenheit, eine maximale Steigung, eine Mindestbreite, einen geeigneten Wegetyp (z. B. Ausschließen einer Einbahnstraße, die vom Anfangspunkt zum Endpunkt nicht befahren werden darf) und/oder eine Hindernisfreiheit der Verbindung des Anfangspunktes und des Endpunktes betreffen und von dem jeweils zum Passieren der Verbindungsroute 330 vorgesehenen Verkehrsmittel abhängen.

Die Verbindungsroute 330 wird anhand der in der Landkartendatenbank 116 abgelegten Geodaten ermittelt. Der Anfangspunkt des in Figur 3 dargestellten Umkehrabschnitts 320 ist der Knoten 302, der Endpunkt dieses Umkehrabschnitts 320 ist der Knoten 313. Die Knoten 302 und 313 sind durch die Verbindungsroute 330 miteinander verbunden, wobei die Verbindungsroute 330 kürzer als der Umkehrabschnitt 320 ist.

Um einen Umkehrabschnitt 32, 420 eines Routenabschnitts beurteilen zu können, für dessen Anfangspunkt und Endpunkt keine digitale Karte mit möglichen Verbindungsrouten verfügbar ist, wird ein Abstandsschwellenwert vorgegeben. Ein Routenabschnitt der Erkundungsroute 300, 400, 500 als der Umkehrabschnitt 320, 420 betrachtet, wenn ein Abstand eines Endpunktes des Routenabschnitts von einem Anfangspunkt des Routenabschnitts kleiner als der vorgegebene Abstandsschwellenwert ist. Dieses Kriterium für den Umkehrabschnitt 320, 420 eines Routenabschnitts der Erkundungsroute 300, 400, 500 kann eine tatsächlich nicht existente Verkürzbarkeit ausweisen und ist daher weniger zuverlässig als das vorgenannte Kriterium, bei dem in einer digitalen Karte nach einer Verbindungsroute 330 gesucht wird. Es hat jedoch den Vorteil, dass es nicht die Verfügbarkeit von Geodaten voraussetzt und daher in beliebigen Gebieten eingesetzt werden kann. Die Existenz einer Verbindungsroute 330 zwischen dem Anfangspunkt und dem Endpunkt eines Routenabschnitts ist in der Regel umso wahrscheinlicher, je kleiner der Abstand zwischen dem Endpunkt und dem Anfangspunkt des Routenabschnitts ist. Wird der Abstandsschwellenwert daher genügend klein gewählt, ist die Wahrscheinlichkeit groß, dass zwischen dem Anfangspunkt und dem Endpunkt eines Routenabschnitts tatsächlich eine Verbindungsroute 330 existiert, wenn der Abstand zwischen dem Anfangspunkt und dem Endpunkt kleiner als der Abstandsschwellenwert ist. Neben einer geeigneten Wahl des Abstandsschwellenwertes können gegebenenfalls auch Informationen über den Routenabschnitt ausgewertet werden, um die Gefahr zu reduzieren, eine nicht vorhandene Verbindungsroute 330 auszuweisen. Beispielsweise kann eine Höhendifferenz zwischen dem Anfangspunkt und dem Endpunkt des Routenabschnitts berücksichtigt werden, sofern sie bekannt ist. Beispielsweise wird nur dann auf die Existenz einer Verbindungsroute 330 geschlossen, wenn diese Höhendifferenz unterhalb eines vorgegebenen Höhendifferenzschwellenwertes liegt.

Aus der in Figur 3 dargestellten ersten Erkundungsroute 300 wird in dem fünften Verfahrensschritt 205 eine Musterroute gebildet, die von dem Knoten 301 über den Knoten 302 und den Knoten 313 zu dem Knoten 314 verläuft. Anstelle des Umkehrabschnitts 320 weist die Musterroute die Verbindungsroute 330 auf.

**Figur 4** zeigt eine zweite Erkundungsroute 400, die aus den Knoten 401 bis 406 und jeweils zwei Knoten 401 bis 406 verbindenden Kanten besteht. Dabei wird ein Routenabschnitt, der zwischen den Knoten 402 und 405 über die Knoten 403 und 404 verläuft, als ein Umkehrabschnitt 420 beurteilt, weil er in zueinander entgegengesetzten Richtungen zurückgelegt wird, nämlich zunächst von dem Knoten 402 zu dem Knoten 405 und anschließend von dem Knoten 405 zurück zu dem Knoten 402.

Aus der in Figur 4 dargestellten zweiten Erkundungsroute 400 wird in dem fünften Verfahrensschritt 205 eine Musterroute gebildet, die von dem Knoten 401 über den Knoten 402 zu dem Knoten 406 verläuft und den Umkehrabschnitt 420 nicht aufweist.

**Figur 5** zeigt eine dritte Erkundungsroute 500, die aus den Knoten 501 bis 515 und jeweils zwei Knoten 501 bis 515 verbindenden Kanten besteht. Die dritte Erkundungsroute 500 weist keinen Routenabschnitt auf, der als ein Umkehrabschnitt beurteilt wird, weil sie keinen verkürzbaren Routenabschnitt aufweist, da sie keinen Routenabschnitt aufweist, dessen Anfangspunkt und Endpunkt durch eine Verbindungsroute 330 verbunden sind oder/und einen Abstand voneinander aufweisen, der kleiner als der vorgegebene Abstandsschwellenwert ist.

Aus der in Figur 5 dargestellten dritten Erkundungsroute 500 wird in dem fünften Verfahrensschritt 205 eine Musterroute gebildet, die mit der dritten Erkundungsroute 500 übereinstimmt.

## Patentansprüche

1. Verfahren zum Bilden einer Musterroute aus einer Erkundungsroute mit einem in einem Fahrzeug angeordneten Navigationssystem (100), wobei mit dem Navigationssystem (100)
• eine von dem Fahrzeug zurückgelegte Erkundungsroute (300) bestimmt wird, indem aktuelle Positionen bestimmt werden und die Erkundungsroute anhand der Positionen bestimmt wird,
• geprüft wird, ob die Erkundungsroute (300) einen Umkehrabschnitt (320) aufweist, und, wenn die Erkundungsroute (300) einen Umkehrabschnitt (320) aufweist,
• aus der Erkundungsroute (300) eine Musterroute gebildet wird, die den Umkehrabschnitt (320) nicht aufweist,
• wobei ein Routenabschnitt der Erkundungsroute (300) als der Umkehrabschnitt (320) betrachtet wird, wenn mittels des Navigationssystems (100) anhand von Geodaten, die in einer Landkartendatenbank des Navigationssystems (100) abgelegt sind, eine von einem Anfangspunkt des Routenabschnitts zu einem Endpunkt des Routenabschnitts verlaufende Verbindungsroute (330) ermittelt wird, die kürzer als der Routenabschnitt ist und von dem Anfangspunkt zu dem Endpunkt mit einem Verkehrsmittel passierbar ist,
▪ wobei die Musterroute von dem Navigationssystem an zumindest ein anderes Fahrzeug oder an ein mobiles Endgerät gesendet wird.

2. Verfahren nach Anspruch 1, bei dem die Musterroute von dem Navigationssystem (100) an ein anderes Navigationssystem in dem zumindest einen anderen Fahrzeug und/oder an einen Empfänger, durch den die Musterroute einem anderen Navigationssystem in dem zumindest einen anderen Fahrzeug verfügbar gemacht wird, gesendet wird.

3. Verfahren nach einem der Ansprüche 1 und 2, bei dem die Musterroute extern abrufbar von dem Navigationssystem (100) bereitgehalten wird, wobei das Navigationssystem (100) als ein Zentralrechner fungiert.

4. Verfahren nach Anspruch 3,
bei dem von dem Navigationssystem (100) eine Information über die Abrufbarkeit der Musterroute und/oder eine Zugriffsberechtigung für die Musterroute versendet wird.

5. Verfahren nach einem der vorhergehenden Ansprüche, bei dem die Musterroute von einem anderen Navigationssystem in dem zumindest einen anderen Fahrzeug für eine Zielführung verwendet wird.

6. Navigationssystem (100) zur Durchführung des Verfahrens gemäß einem der vorhergehenden Ansprüche, welches eine Recheneinheit (110) aufweist, die zur Bestimmung der zurückgelegten Erkundungsroute (300), zur Prüfung, ob die Erkundungsroute (300) einen Umkehrabschnitt (320) aufweist, und zur Bildung der Musterroute, so dass die Musterroute den Umkehrabschnitt (320) nicht aufweist, eingerichtet ist, wobei das Navigationssystem zur Anordnung in einem Fahrzeug eingerichtet ist und Mittel zum Senden der Musterroute an zumindest ein anderes Fahrzeug oder an ein mobiles Endgerät aufweist.

## Claims

1. Method for forming a model route from an exploration route by using a navigation system (100) disposed in a vehicle wherein by using the navigation system (100)
• an exploration route (300) traveled by the vehicle is determined by determining current positions and determining the exploration route (300) on the basis of the positions,
• it is proven if the exploration route (300) comprises a turning back section (320) and, if the exploration route (300) comprises a turning back section (320),
• a model route which does not comprise the turning back section (320) is formed from the exploration route (300),
• wherein a route section of the exploration route (300) is considered as the turning back section (320) if by using the navigation system (100) on the basis of geodata filed in a map data base of the navigation system (100) a connecting route (330) running from an initial point to a final point of the route section is identified which is shorter than the route section and is passable from the initial point to the final point by a transportation means wherein the model route is sent by the navigation system to at least one other vehicle or to a mobile end device.

2. Method according to claim 1
wherein the model route is sent by the navigation system (100) to another navigation system in the at least one other vehicle and/or to a receiver by which the model route is made available to another navigation system in the at least one other vehicle.

3. Method according to one of the claims 1 and 2
wherein the model route is held ready externally retrievable by the navigation system (100) wherein the navigation system (100) functions as a central computer.

4. Method according to claim 3
wherein an information about the retrievability of the model route and/or an access authorisation for the model route is sent by the navigation system (100).

5. Method according to one of the preceding claims
wherein the model route is used by another navigation system in the at least one other vehicle for a route guidance.

6. Navigation system (100) for performing the method according to one of the preceding claims which comprises a computing unit (110) which is configured for determining the traveled exploration route (300), for proving if the exploration route (300) comprises a turning back section (320), and for forming a model route so that the model route does not comprise the turning back section (320), wherein the navigation system is configured for disposition in a vehicle and comprises means for transmitting the model route to at least one other vehicle or to a mobile end device.

## Revendications

1. Procédé de création d'un itinéraire modèle à partir d'un itinéraire d'exploration avec un système de navigation (100) installé dans un véhicule, le système de navigation (100) étant utilisé pour
• déterminer un itinéraire d'exploration (300) parcouru par le véhicule en déterminant des positions courantes et en déterminant l'itinéraire d'exploration à partir de ces positions,
• vérifier si l'itinéraire d'exploration (300) comprend une section de retour (320) et, si l'itinéraire d'exploration (300) comprend une section de retour (320),
• créer un itinéraire modèle à partir de l'itinéraire d'exploration (300) sans la section de retour (320),
• une section de l'itinéraire d'exploration (300) étant considérée comme section de retour (320) si le système de navigation (100) permet de déterminer, sur la base des données géographiques enregistrées dans une base de données cartographiques du système de navigation (100), un itinéraire de raccordement (330) allant d'un point de départ de la section d'itinéraire à un point final de la section d'itinéraire, étant plus court que la section d'itinéraire et pouvant être parcouru avec un moyen de transport du point de départ au point final, l'itinéraire modèle étant envoyé à au moins un autre véhicule ou à un équipement terminal mobile par le système de navigation.

2. Procédé selon la revendication 1,
**caractérisé en ce que** l'itinéraire modèle est transmis par le système de navigation (100) à un système de navigation d'au moins un autre véhicule et/ou à un récepteur mettant l'itinéraire modèle à la disposition d'un autre système de navigation d'au moins un autre véhicule.

3. Procédé selon l'une des revendications 1 et 2,
**caractérisé en ce que** l'itinéraire modèle est mis à disposition par le système de navigation (100) et peut être consulté de l'extérieur, le système de navigation (100) ayant le rôle d'un ordinateur central.

4. Procédé selon la revendication 3,
**caractérisé en ce que** le système de navigation (100) envoie une information relative à la possibilité de consulter l'itinéraire modèle et/ou un droit d'accéder à l'itinéraire modèle.

5. Procédé selon l'une des revendications précédentes,
**caractérisé en ce que** l'itinéraire modèle est utilisé par un autre système de navigation d'au moins un autre véhicule pour rejoindre une destination.

6. Système de navigation (100) pour la mise en oeuvre d'un procédé selon l'une des revendications précédentes, comportant une unité de calcul (110) configurée pour déterminer l'itinéraire d'exploration (300) parcouru, vérifier si l'itinéraire d'exploration (300) comporte une section de retour (320), et créer l'itinéraire modèle de sorte que l'itinéraire modèle ne comporte pas la section de retour (320), le système de navigation étant configuré pour être installé dans un véhicule, et comportant des moyens pour envoyer l'itinéraire modèle à au moins un autre véhicule ou à un équipement terminal mobile.
